# EUROPÄISCHE PATENTSCHRIFT

(11) **EP 2 442 413 B1**
(45) Veröffentlichungstag und Bekanntmachung des Hinweises auf die Patenterteilung: **09.08.2017**
(21) Anmeldenummer: 11183795.1
(22) Anmeldetag: 04.10.2011
(51) Int. Cl.: H02G 1/12, H01R 43/28

(54) **KABELBEARBEITUNGSEINRICHTUNG MIT ABLAGE**
CABLE PROCESSING DEVICE WITH STORAGE
DISPOSITIF DE PRÉPARATION DE CÂBLE DOTÉ D'UN DÉPÔT

(30) Priorität: 13.10.2010 EP 10187463
(43) Veröffentlichungstag der Anmeldung: 18.04.2012
(73) Patentinhaber: Komax Holding AG, 6036 Dierikon (CH)
(72) Erfinder: Fischer, Daniel, 6005 Luzern (CH)
(74) Vertreter: Inventio AG

(56) Entgegenhaltungen:
- EP-A2- 0 788 200
- EP-A2- 2 028 732
- DE-U1- 8 901 210
- US-A- 4 496 037

## Beschreibung

Die Erfindung betrifft eine Kabelbearbeitungseinrichtung mit Bearbeitungsstationen zur Konfektionierung eines Kabels mit einer Ablage zur Aufnahme von bearbeiteten Kabeln, wobei die Ablage eine Ablagewanne und eine Entnahmewanne aufweist und die bearbeiteten Kabel eines Fertigungsloses in die Ablagewanne ablegbar sind und danach der Entnahmewanne übergebbar sind und die Ablagewanne an der den Kabeln zugewandten Oberfläche eine Oberflächenstruktur in der Form von Erhebungen aufweist, auf denen die Kabel punktuell aufliegen und über die sich die Kabel beim Schwenken der Ablagewanne in die Entnahmewanne bewegen.

Aus der Schrift EP 2 028 732 A2 ist eine Kabelbearbeitungseinrichtung nach dem Oberbegriff des Anspruches 1 bekannt geworden, mittels der Kabelenden konfektionierbar sind. Ein erster Schwenkarm mit Greifer fasst das voreilende Kabelende und führt dieses zur Bearbeitung Bearbeitungsstationen zu, wobei das Kabel geschnitten, abisoliert und ein Kontakt angeschlagen wird. Danach wird das Kabel auf eine gewünschte Länge vorgeschoben, wobei das voreilende Kabelende mittels Transportband abgezogen wird. Das nacheilende Kabelende wird dann von einem zweiten Schwenkarm mit Greifer zur Bearbeitung weiteren Bearbeitungsstationen zugeführt. Nach der Bearbeitung schwenkt der zweite Schwenkarm mit Greifer das nacheilende Kabelende über eine Ablage, wobei das an den Enden konfektionierte Kabel mit Hilfe des laufenden Transportbandes in die Ablage fällt. Bei dieser Art von Kabelbearbeitungseinrichtung besteht das Bedürfnis, die konfektionierten Kabel so effizient wie möglich zu transportieren.

Aus der Schrift EP 0 788 200 A2 ist eine Kabelablagevorrichtung bekannt geworden, bei der die bearbeiteten Kabel in eine nach dem Prinzip eines Flügelrades arbeitende Ablage abgeworfen werden. Die um eine Achse drehbare Ablage weist längs der Achse angeordnete Flügel auf, wobei jeder Flügel zusammen mit seinem benachbarten Flügel eine Ablagewanne bildet. Steht ein Flügel aufrecht, können zwei Ablagewannen gleichzeitig bearbeitete Kabel aufnehmen. Sind die Ablagewannen voll und/oder das Fertigungslos produziert, wird die Ablage weitergedreht und die Ablagewannen entleert.

Die Erfindung, wie sie in Anspruch 1 gekennzeichnet ist, löst die Aufgabe, eine Kabelbearbeitungseinrichtung mit Ablage zu schaffen, die bei jeder Kabelart und bei jeder bearbeiteten Kabellänge zuverlässig arbeitet und eine zuverlässige Kabelablage ermöglicht.

Vorteilhafte Weiterbildungen der Erfindung sind in den abhängigen Patentansprüchen angegeben.

Die Ablage der Kabelbearbeitungseinrichtung besteht aus einer Ablagewanne und aus einer Entnahmewanne. Die Ablagewanne dient als Zwischenspeicher und ermöglicht das Sammeln einer bestimmten Anzahl von fertig bearbeiteten Kabeln. Die bestimmte Anzahl fertig bearbeiteter Kabel wird auch Fertigungslos genannt, wobei ein Fertigungslos automatisch oder manuell durch einen Operator ausgelöst der Entnahmewanne übergeben wird, aus der das Fertigungslos beispielsweise von Hand entnommen werden kann währenddem das nächste Fertigungslos produziert wird. Üblicherweise erfolgt dabei die Übergabe der Kabel an die Entnahmewanne durch Schwenken der Ablagewanne nach unten, wobei die Kabel in die Entnahmewanne gleiten. Danach wird die Ablagewanne wieder hochgeschwenkt und ist zur Aufnahme des folgenden Fertigungsloses wieder bereit. Kabel mit kleinem Querschnitt und damit geringem Gewicht pro Längeneinheit haben oftmals die Eigenschaft an der Ablagewanne zu haften, wodurch das Fertigungslos nicht vollständig der Entnahmewanne übergeben wird. Als Folge davon ergeben sich unvollständige Fertigungslose in der Entnahmewanne und/oder Produktionsstörungen. Ursache für das unerwünschte Haften der Kabel an der Ablagewanne ist beispielsweise elektrostatische Aufladung oder die erhöhte Haftung von weichen Isolationsmaterialien der Kabel.

Das unerwünschte Haften der Kabel an der Ablagewanne wird vermieden durch eine sichtbare Struktur an der den Kabeln zugewandten Oberfläche der Ablagewanne. Üblicherweise ist die Ablagewanne aus glattem Blech gefertigt und als Struktur wird die kabelseitige Blechoberfläche mit Rippen oder Noppen oder Sicken, etc. mittels Prägeverfahren oder Tiefziehverfahren oder Schweissen oder Fräsen etc. versehen. Die Kabel liegen punktuell auf den Rippen, Noppen oder Sicken, etc. auf. Die Höhe der Rippen, Noppen oder Sicken, etc. gegenüber dem glatten Blech ist insbesondere für Kabel mit kleinem Querschnitt ausgelegt. Das Kabel als biegeschlaffes Teil soll auf einer möglichst kleinen Fläche der Ablagewanne aufliegen. Wird der Abstand der Rippen zu gross gewählt oder die Höhe der Rippen zu klein gewählt, wird der gewünschte Effekt nicht erreicht. Im Idealfall sollte das Kabel nur auf den Rippen aufliegen ohne die Ablage zwischen den Rippen zu berühren. Bei Kabeln mit grösserem Querschnitt und entsprechendem Gewicht pro Längeneinheit treten keine die Produktion störenden Haftprobleme auf.

Im Kabelbearbeitungsbereich ist mit Konfektionieren jede Bearbeitung von Kabeln gemeint wie beispielsweise Kabel auf ein bestimmtes Längenmass ablängen, mindestens zwei Kabel miteinander verdrillen, Kabel an den Kabelenden bearbeiten wie beispielsweise abisolieren, Kontakte anschlagen, Tüllen aufsetzen, Steckergehäuse mit angeschlagenen Kontakten bestücken, etc..

Anhand der beiliegenden Figuren wird die vorliegende Erfindung näher erläutert.

### Es zeigen:

Fig. 1
   ein Ausführungsbeispiel einer Kabelbearbeitungsmaschine mit zwei Schwenkarmen und einer Ablage,
Fig. 2
   einen beispielhaften Schwenkarm beim Ablegen eines Kabels,
Fig. 3
   Einzelheiten einer oberflächenstrukturierten Ablage,
Fig. 4
   eine beispielhafte Ablagewanne mit einem Einlageteil,
Fig. 5
   ein beispielhaftes Einlageteil mit Rippen und
Fig. 6
   ein beispielhaftes Einlageteil mit Noppen.

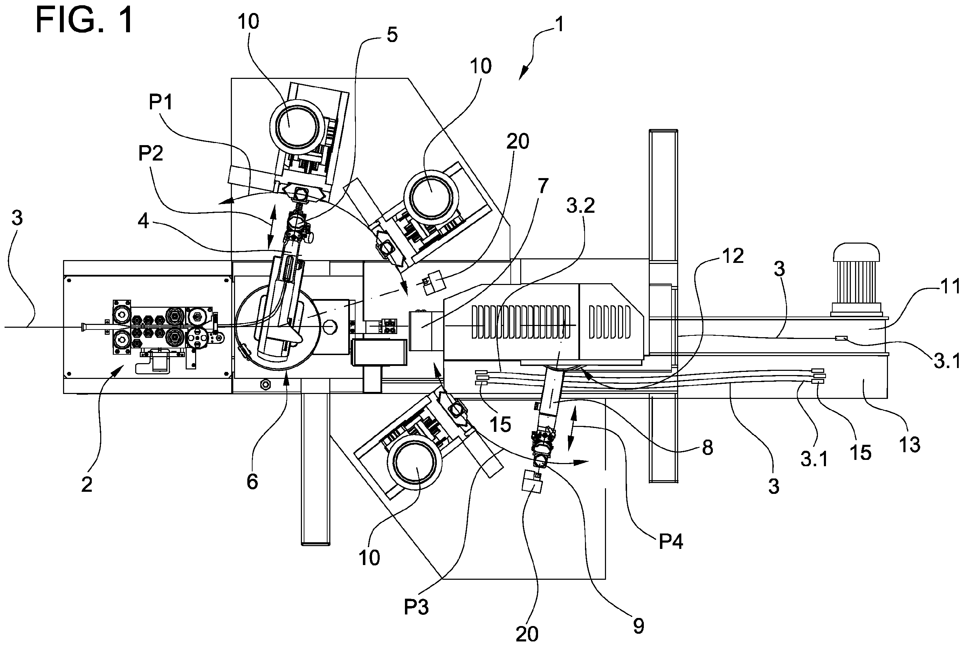

Fig. 1 zeigt ein Ausführungsbeispiel einer Kabelbearbeitungsmaschine 1 mit einer als Bandantrieb 2 ausgebildeten Kabelvorschubeinrichtung, wobei der Bandantrieb 2 ein Kabel 3 einem ersten Schwenkarm 4 mit einem ersten Greifer 5 zuführt. Mittels ersten Antrieben 6 kann der erste Schwenkarm 4 in eine mit einem Pfeil P1 symbolisierte Schwenkbewegung und/oder in eine mit einem Pfeil P2 symbolisierte Linearbewegung versetzt werden. Mit Trenn-/Abisoliermessern 7 kann das Kabel getrennt und/oder abisoliert werden.

Im weiteren weist die Kabelbearbeitungsmaschine 1 einen zweiten Schwenkarm 8 mit einem zweiten Greifer 9 auf. Mittels zweiten Antrieben 12 kann der zweite Schwenkarm 8 in eine mit einem Pfeil P3 symbolisierte Schwenkbewegung und/oder in eine mit einem Pfeil P4 symbolisierte Linearbewegung versetzt werden. Der erste Schwenkarm 4 bedient als Zuführeinrichtung mittels Drehbewegung P1 und Linearbewegung P2 seitlich der Kabellängsachse angeordnete Bearbeitungsstationen 10 (beispielsweise Crimppressen und/oder Tüllenbestücker) mit voreilenden Kabelenden 3.1. Der mittels zweiten Antrieben 12 in Bewegung versetzte zweite Schwenkarm 8 bedient als Zuführeinrichtung mittels Drehbewegung P3 und Linearbewegung P4 seitlich der Kabellängsachse angeordnete Bearbeitungsstationen 10 (beispielsweise Crimppressen und/oder Tüllenbestücker) mit nacheilenden Kabelenden 3.2.

Nach der Bearbeitung des voreilenden Kabelendes 3.1 wird das Kabel 3 mittels eines Transportbandes 11 weitertransportiert. Der zweite Greifer 9 fasst das nacheilende Kabelende 3.2, danach wird das Kabel 3 getrennt und das nacheilende Kabelende 3.2 abisoliert und den Bearbeitungsstationen 10 zugeführt. Nach der Bearbeitung des nacheilenden Kabelendes 3.2 gelangt das Kabel 3 in eine Ablage 13. Mit 20 ist eine Haltevorrichtung bezeichnet, die der Prüfung der im automatisierten Kabelbearbeitungsprozess hergestellten Kabelendverbindung (beispielsweise Crimpverbindung zwischen einem Crimpkontakt und dem Kabel 3) dient. Die Prüfung erfolgt durch Messen einer Auszugskraft indem die Kabelendverbindung in der Haltevorrichtung eingespannt wird und der Greifer am Kabel bis zum Bruch der Verbindung zieht.

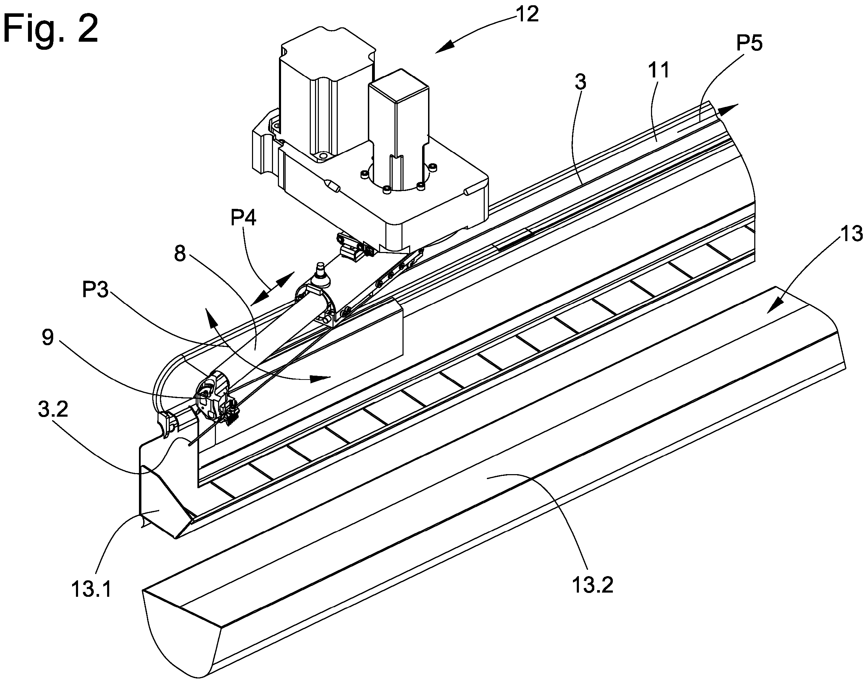

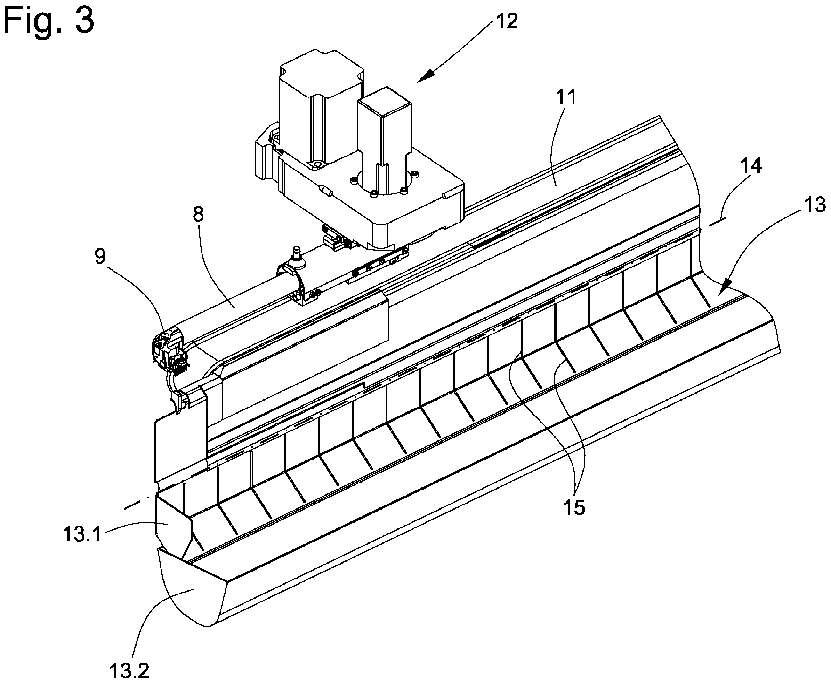

Fig. 2 zeigt den zweiten Schwenkarm 8 beim Ablegen des Kabels 3 in die Ablage 13, die aus einer Ablagewanne 13.1 und aus einer Entnahmewanne 13.2 besteht. Die Ablagewanne 13.1 wie auch die Entnahmewanne 13.2 haben beispielsweise eine traufenartige oder eine trogartige Form. Der zweite Schwenkarm 8 hat das bearbeitete, nacheilende Kabelende 3.2 über die Ablagewanne 13.1 geschwenkt, wobei das Kabel 3 mit Hilfe des in Pfeilrichtung P5 laufenden Transportbandes 11 zur Aufnahme in die Ablagewanne 13.1 fällt. Die Ablagewanne 13.1 dient als Zwischenspeicher und sammelt eine bestimmte, dem Fertigungslos entsprechende Anzahl von fertig bearbeiteten Kabeln 3. Nachdem die bestimmte Anzahl fertig konfektionierter Kabel 3 erreicht ist, wird das Fertigungslos automatisch oder manuell durch einen Operator ausgelöst, beispielsweise durch Schwenken der Ablagewanne 13.1 nach unten, wie in Fig. 3 gezeigt, der Entnahmewanne 13.2 übergeben.

Fig. 3 zeigt Einzelheiten der nach unten geschwenkten Ablagewanne 13.1. Die Ablagewanne 13.1 ist um eine erste Achse 14 schwenkbar mittels beispielsweise eines nicht dargestellten Pneumatikantriebs. Andere Schwenkantriebe wie beispielsweise elektromagnetische Antriebe sind auch möglich.

An der den in der Ablagewanne 13.1 liegenden Kabeln 3 zugewandten Oberfläche der Ablgewanne 13.1 ist eine von Auge und ohne Hilfsmittel sichtbare Struktur in der Form von Erhebungen vorgesehen. Die Erhebungen können beispielsweise Rippen 15 sein. Die Rippen 15 bilden an der kabelseitigen Oberfläche eine sichtbare Oberflächenstruktur. Die bearbeiteten Kabel 3 liegen im Wesentlichen nicht auf dem glatten Blech der Ablagewanne 13.1 auf, sondern liegen vorwiegend punktuell auf den beispielsweise quer zu den bearbeiteten Kabeln 3 verlaufenden, schlanken Rippen 15. Die Höhe der Rippen 15 gegenüber dem glatten Blech ist insbesondere für Kabel mit kleinem Aussendurchmesser ausgelegt und kann beispielsweise 0,5 mm bis 1 mm betragen. Versuche haben gezeigt, dass der Rippenabstand 80 mm nicht übersteigen sollte. Bei kleinerem Rippenabstand kann die oben genannte Rippenhöhe kleiner sein. Bei Kabeln mit grösserem Aussendurchmesser als 1,2 mm und entsprechendem Gewicht pro Längeneinheit treten keine die Produktion störenden Haftprobleme auf. Zwischen zwei Rippen 15 liegen die bearbeiteten Kabel 3 im Wesentlichen nicht auf dem glatten Blech der Ablagewanne 13.1 auf, sondern hängen von Rippe 15 zu Rippe 15 durch und liegen an den Rippen 15 vorwiegend punktuell auf.

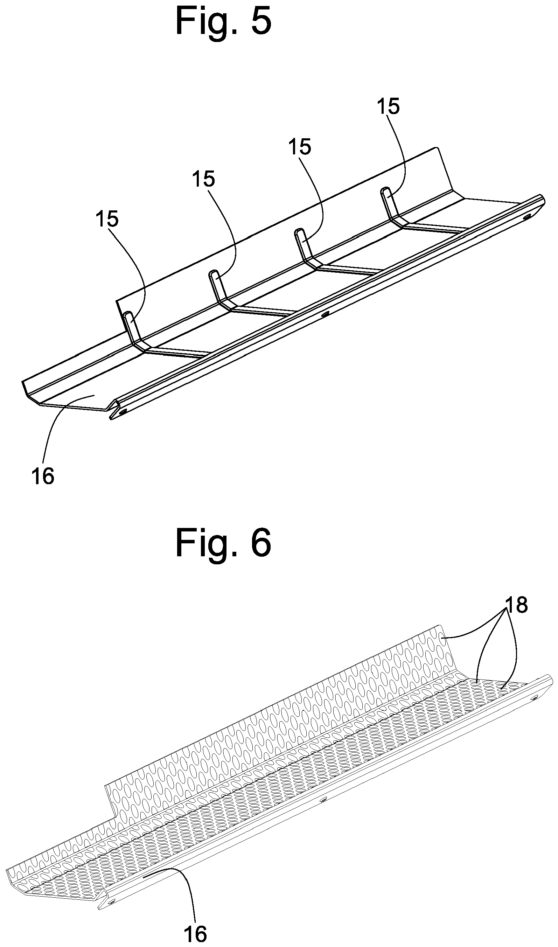

Beim Schwenken der Ablagewanne 13.1 in die gezeigte Lage der Fig. 3 gleiten die Kabel 3 auf den Rippen in die Entnahmewanne 13.2. Mit der sichtbaren Oberflächenstruktur kann die übermässige Haftung der Kabel 3 an der glatten Oberfläche der Ablagewanne 13.1 vermindert werden. Die Oberflächenstruktur bzw. die Erhebungen können beispielsweise auch wie in Fig. 6 gezeigt ausgebildet sein und anstelle der Rippen 15 sichtbare Noppen 18 mit beispielsweise einer Höhe von 0,2 mm oder Sicken mit beispielsweise einer Höhe von 0,2 mm aufweisen. Mindestens die kabelseitige Oberfläche einer Noppe 18 oder Sicke ist gewölbt, vergleichbar mit der Oberfläche einer Sammellinse, wobei die Kabel 3 punktuell auf den Wölbungen aufliegen. Wie am Beispiel der Noppen oder Sicken gezeigt, müssen die Erhebungen nicht rechtwinklig zur Gleitrichtung der Kabel verlaufen und nicht durchgehend sein.

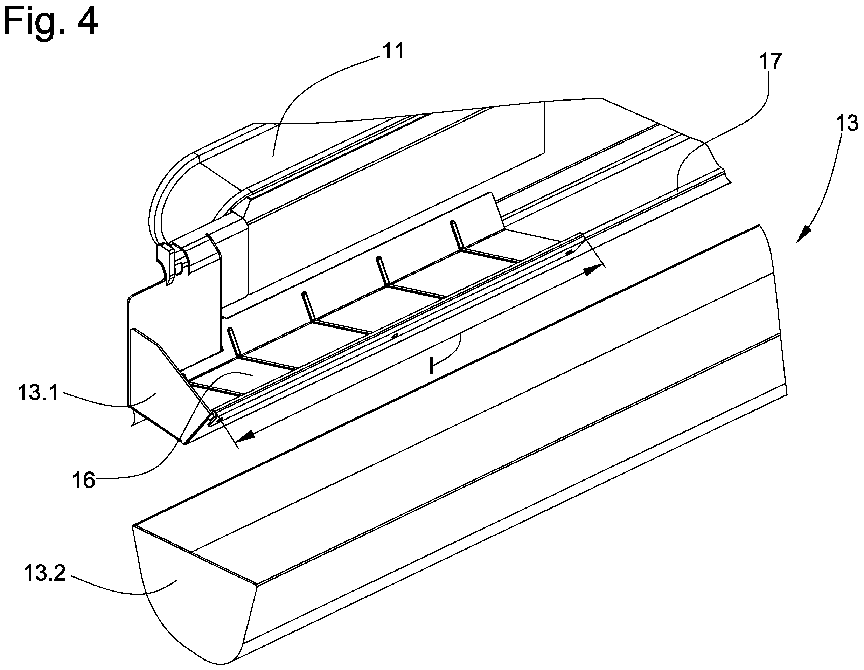

Fig. 4 zeigt ein Ausführungsbeispiel der Ablagewanne 13.1 mit einem Einlageteil 16. Das Einlageteil 16 ist auf die glatte Wandung 17 bzw. Oberfläche der Ablagewanne 13.1 aufsetzbar und mit dieser verbindbar. Das Einlageteil 16 weist eine Oberflächenstruktur auf wie in Fig. 5 gezeigt, die vergleichbar ist mit der Oberflächenstruktur der Fig. 3. Die Oberflächenstruktur kann auch wie in Fig. 6 gezeigt ausgeführt sein oder Sicken aufweisen.

Die Länge 1 des Einlageteils 16 kann auf die Kabellänge angepasst sein. Werden beispielsweise Kabel mit einer kleinen Länge bearbeitet, genügt ein Einlageteil 16 wie in Fig. 4 und 5 gezeigt, wobei die Länge l ein Bruchteil der gesamten Länge der Ablagewanne 13.1 sein kann. Das Einlageteil 16 kann auch zusätzlich so ausgestaltet sein, dass die Fläche, über die die Kabel 3 abgleiten gegenüber der Wandung 17 der Ablagewanne 13.1 um einen bestimmten Winkel angestellt ist um das Abgleiten der Kabel zu verbessern.

## Patentansprüche

1. Kabelbearbeitungseinrichtung (1) mit Bearbeitungsstationen (7,10) zur Konfektionierung eines Kabels (3) mit einer Ablage (13) zur Aufnahme von bearbeiteten Kabeln (3), wobei die Ablage (13) eine Ablagewanne (13.1) und eine Entnahmewanne (13.2) aufweist und die bearbeiteten Kabel (3) eines Fertigungsloses in die Ablagewanne (13.1) ablegbar sind und danach der Entnahmewanne (13.2) übergebbar sind, **dadurch gekennzeichnet, dass** die Ablagewanne (13.1) an der den Kabeln (3) zugewandten Oberfläche eine Oberflächenstruktur in der Form von Erhebungen aufweist, wobei die Erhebungen Rippen (15) oder Noppen (18) oder Sicken sind, auf denen die Kabel (3) punktuell aufliegen und über die sich die Kabel (3) beim Schwenken der Ablagewanne (13.1) in die Entnahmewanne (13.2) bewegen.

2. Kabelbearbeitungseinrichtung (1) nach Anspruch 1,
**dadurch gekennzeichnet,**
**dass** die Höhe der Rippen (15) 0,5 mm bis 1 mm ist bei einem Rippenabstand von höchstens 80 mm.

3. Kabelbearbeitungseinrichtung (1) nach Anspruch 1,
**dadurch gekennzeichnet,**
**dass** die Höhe der Noppen (18) oder Sicken 0,2 mm ist.

4. Kabelbearbeitungseinrichtung (1) nach einem der vorhergehenden Ansprüche,
**dadurch gekennzeichnet,**
**dass** ein Einlageteil (18) mit Erhebungen vorgesehen ist, das auf eine Wandung (17) ohne Erhebungen der Ablagewanne (13.1) aufsetzbar ist.

5. Kabelbearbeitungseinrichtung (1) nach Anspruch 4,
**dadurch gekennzeichnet,**
**dass** die Länge (l) des Einlageteils (16) in Abhängigkeit der Länge der Kabel (3) wählbar ist.

## Claims

1. A cable processing device (1) having processing stations (7, 10) for assembling a cable (3) having a storage element (13) for receiving processed cables (3), wherein the storage element (13) has a storage tray (13.1) and a removal tray (13.2) and the processed cables (3) of a production lot may be placed into the storage tray (13.1) and then may be transferred to the removal tray (13.2), **characterized in that** on the surface facing the cables (3) the storage tray (13.1) has a surface structure in the form of elevations, wherein the elevations are ribs (15) or nubs (18) or beads, on which points of the cables (3) rest and over which the cables (3) move when the storage tray (13.1) is pivoted into the removal tray (13.2).

2. The cable processing device (1) according to claim 1,
**characterized in that**
the height of the ribs (15) is 0.5 mm to 1 mm with a rib interval of no more than 80 mm.

3. The cable processing device (1) according to claim 1,
**characterized in that**
the height of the nubs (18) or beads is 0.2 mm.

4. The cable processing device (1) according to any of the preceding claims,
**characterized in that**
an insert part (18) with elevations is provided that may be placed onto a wall (17), without elevations, of the storage tray (13.1).

5. The cable processing device (1) according to claim 4,
**characterized in that**
the length (1) of the insert part (16) is selectable as a function of the length of the cable (3).

## Revendications

1. Dispositif de traitement de câble (1) avec des stations de traitement (7, 10) pour la préparation d'un câble (3), avec un élément de réception (13) destiné à recevoir des câbles (3) préparés, l'élément de réception (13) comportant un bac de réception (13.1) et un bac d'extraction (13.2), et les câbles préparés (3) d'un lot de fabrication étant aptes à être posés dans le bac de réception (13.1) puis à être transférés dans le bac d'extraction (13.2),
**caractérisé en ce que** le bac de réception (13.1) présente sur sa surface tournée vers les câbles (3) une structure superficielle en forme de saillies, les saillies étant des nervures (15) ou des bosses (18) ou des moulures sur lesquelles les câbles (3) sont posés ponctuellement et par l'intermédiaire desquelles les câbles (3) se déplacent lors du pivotement du bac de réception (13.1) jusque dans le bac d'extraction (13.2).

2. Dispositif de traitement de câble (1) selon la revendication 1, **caractérisé en ce que** la hauteur des nervures (15) est de 0,5 mm à 1 mm, avec un écartement de 80 mm au maximum.

3. Dispositif de traitement de câble (1) selon la revendication 1, **caractérisé en ce que** la hauteur des bosses (18) ou des moulures est de 0,2 mm.

4. Dispositif de traitement de câble (1) selon l'une des revendications précédentes, **caractérisé en ce qu'**il est prévu un élément rapporté (18), pourvu de saillies, qui est apte à être posé sur une paroi (17) sans saillies du bac de réception (13.1).

5. Dispositif de traitement de câble (1) selon la revendication 4, **caractérisé en ce que** la longueur (1) de l'élément rapporté (16) est apte à être choisie en fonction de la longueur des câbles (3).
